# EUROPEAN PATENT APPLICATION

(11) **EP 3 418 762 A1**
(43) Date of publication of application: **26.12.2018**
(21) Application number: 17305758.9
(22) Date of filing: 20.06.2017
(51) Int. Cl.: G01S 5/02

(54) **DETERMINING THE LOCATION OF APPARATUS IN A NETWORK INFRASTRUCTURE**

(71) Applicant: Nokia Technologies Oy, 02610 Espoo (FI)
(72) Inventor: LE FOL, Olivier, 22304 Lannion (FR); LEPROVOST, Yann, 22304 Lannion (FR); LAJEUNIE, Cassandra, 22304 Lannion (FR); GUILLERM, David, 22304 Lannion (FR); ASTIER, Jerome, 22304 Lannion (FR); OSMOND, Marin, 22304 Lannion (FR); CHARDON, Herve, 22304 Lannion (FR); LE BOUFFANT, Alain, 22304 Lannion (FR)
(74) Representative: Bryers LLP

(57) **Abstract**

A method is disclosed for determining the location of apparatus in a network infrastructure, the method comprising mapping a unique identifier assigned to a network interface of an apparatus to a network interface of a network device and using the local area network connection for determining the location of the apparatus.

## Description

### TECHNICAL FIELD

The present invention relates, in general, to determining the location of apparatus in a network infrastructure, an apparatus and a non-transitory machine-readable storage medium.

### BACKGROUND

The management of workplace resources is a factor that can contribute to running costs and time resources for occupancy analyses of building occupancy and energy usage. For employees within the workplace, particularly in a flexible office space environment for example, it can be difficult to find a free desk, locate colleagues or manage meeting rooms.

Approaches for managing workplace resources exist. For example, occupancy analyses can include: 1) WIFI triangulation, where smartphones are detected via specific WIFI sensors, and 2) The detection of IoT (Internet of Things) devices carried by employees, such as badges or other devices, via IoT sensors.

### SUMMARY

According to an example, there is provided a method for determining the location of apparatus in a network infrastructure, the method comprising mapping a unique identifier assigned to a network interface of an apparatus to a network interface of a network device, and using the local area network connection, determining the location of the apparatus. In an example, the interface can be a local area network (LAN) interface.

The method may further comprise using a bridge protocol data unit received at the apparatus or otherwise for determining a port of the network device connected to the local area network connection.

The method may further comprise using the bridge protocol data unit for determining a media access control address of the port of the network device.

The method may further comprise mapping an identifier associated with the local area network connection of the apparatus to a physical position in an environment.

The method may further comprise performing an initial coarse apparatus localisation using a low power radio-frequency beacon.

The method may further comprise receiving a beacon signal from a beacon, and determining the coarse apparatus location using an identifier transmitted as part of the beacon signal.

According to an example, there is provided an apparatus for determining the location of apparatus in a network infrastructure, the apparatus comprising a first network interface having an assigned unique identifier, an application server, for mapping the unique identifier to a second network interface associated with a network device, and a local area network connection, for determining the location of the apparatus.

The apparatus may further comprise a bridge protocol data unit, for determining a port of the network device connected to the local area network connection or determining a media access control address of the port of the network device.

The apparatus may further comprise a low power radio-frequency beacon, for performing an initial coarse apparatus localisation.

According to an example, there is provided a non-transitory machine-readable storage medium encoded with instructions executable by a processor, the machine-readable storage medium comprising instructions to map a unique identifier assigned to a network interface of an apparatus to a network interface of a network device and instructions to determine the location of the apparatus using the local area network connection.

The machine-readable storage medium may further comprise instructions to process a bridge protocol data unit received at the apparatus or otherwise, determine a port of the network device connected to the local area network connection. The machine-readable storage medium may further comprise instructions to determine a media access control address of the port of the network device using the bridge protocol data unit. The machine-readable storage medium may further comprise instructions to map an identifier associated with the local area network connection of the apparatus to a physical position in an environment. The machine-readable storage medium may further comprise instructions to perform an initial coarse apparatus localisation using a low power radio-frequency beacon. The machine-readable storage medium may further comprise instructions to receive a beacon signal from a beacon, and instruction to determine the coarse apparatus location using an identifier transmitted as part of the beacon signal.

### BRIEF DESCRIPTION OF THE DRAWINGS

Embodiments will now be described, by way of example only, with reference to the accompanying drawings, in which:
Figure 1 is a schematic showing an embodiment using a switch database analysis;
Figure 2 is a schematic showing an embodiment using a network protocol analysis; and
Figure 3 is a schematic showing an embodiment using a network protocol analysis with capture on a portable device (such as a laptop).

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, there is provided an approach for management of workplace resources which uses knowledge of hardware wiring in a workplace, such as wiring between a desk (having a desk ID) and an associated network device (such as a switch or a router for example). The approach can analyse which unique identifier assigned to a network interface (e.g. a LAN interface of an apparatus such as a computer) is connected to which network device (e.g. LAN interface of a network device such as a switch or router) to allow determination of which employee sits at which desk. For example, a network connector (e.g. RJ45 plug) of a desk can be connected to a specific connection port of the network device. A unique identifier can be assigned to each LAN interface. The determination of which employee sits at which desk can be aided by requesting a workplace IT service to provide a database of the connection ports at each desk to determine, using the database, the relationship between the ports and respective employee names.

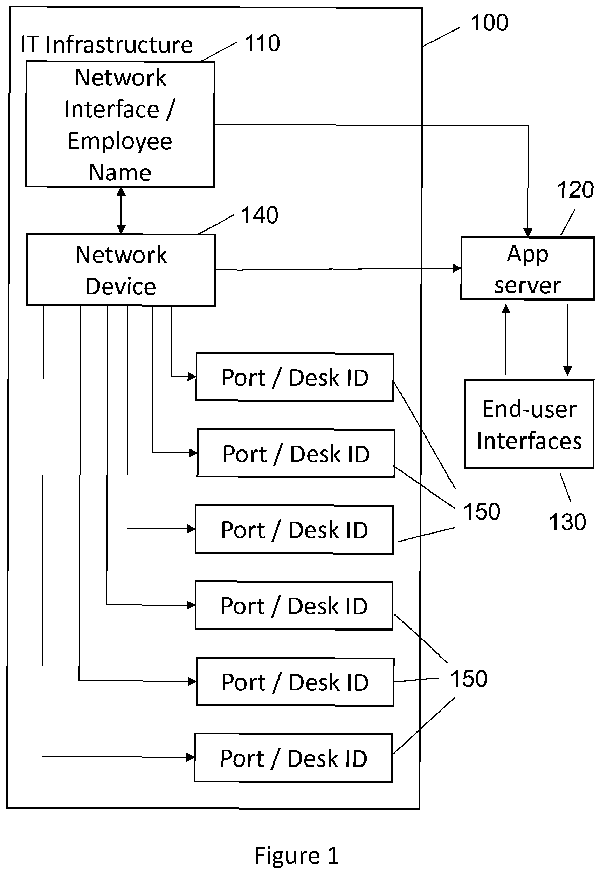

Figure 1 is a schematic representation of an example using a network device (switch) database analysis for managing resources. Existing IT infrastructure 100 is used with a network protocol analysis to analyse which unique identifier assigned to a network interface 110 of an apparatus, for example a MAC address (e.g. LAN interface of the apparatus, such as a computer or laptop device for example), is communicating with which of the network devices or switches 140.

The application server (App server) 120 can include a database with the association between MAC addresses and building locations. Accordingly, it is possible to provide an indication of the occupancy, employee ID (that may be provided by the workplace IT services or an employee themselves for example) and the location of the employee.

According to an example, network protocol analysis performed by the application server 120 can identify communication between a network interface of the apparatus and a connection port 150 of a network device 140 that the apparatus is communicatively coupled to. This can therefor provide an apparatus-to-Switch/Port table and this can be used together with a Switch/Port-to-Desk table to determine the location of the apparatus and therefore the location of the user of the apparatus. This can be displayed or otherwise provided to other users using interfaces 130, such as being displayed as part of a global address book or email contact list for example.

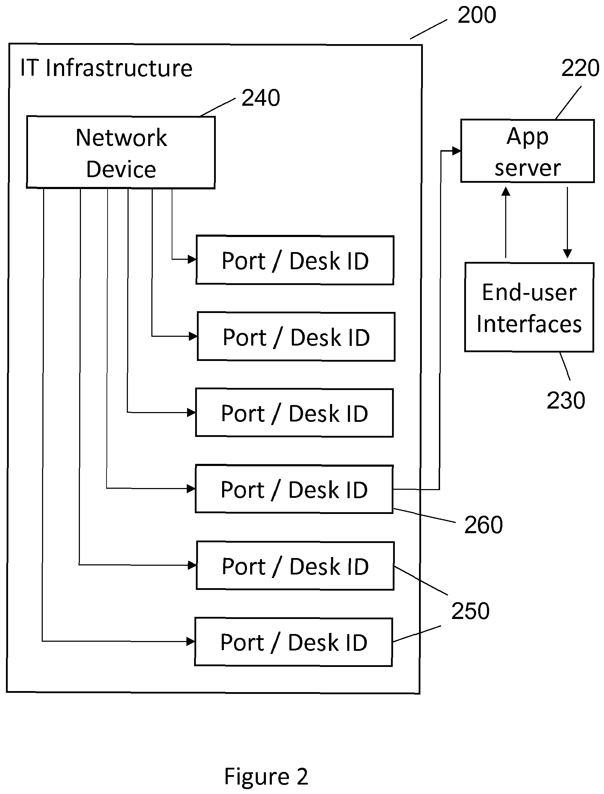

Referring to Figure 2, which is a schematic representation of a system according to an example, an apparatus user, such as an employee for example, may be associated with a portable apparatus or device 230, such as a laptop for example. Each portable device can be plugged into a connection port or plug 250 of the switch 240 or communicate wirelessly via WiFi. To determine which connection port is in use (and hence which ports/plugs are therefore available), a client is run on the employee's portable device 230. In an example, a packet manipulation tool can be used to test or sniff local area connections and switches to determine or capture the connection port 260 which is in use by the apparatus 230. In an example, the tool can use a bridge protocol data unit received at the apparatus or otherwise using directly the LAN connection database available at the network device (i.e. switch or router). If the laptop or computer is connected wirelessly via WiFi the location of the laptop or computer can still be determined (albeit with a lower accuracy) by localising the apparatus within the perimeter of the WiFi hotspot in question. In an example, this coarse localisation may be performed in order to provide an initial apparatus location, which may be fine-tuned using the method described herein.

According to an example, location capturing can also be performed using an initial coarse apparatus localisation using a low power radio-frequency beacon (which can be used without the LAN discovery albeit with a lower accuracy). The beacon signal from a beacon is received to locate a physical position in an environment. As such, the apparatus itself plays the role of detector. Hence, there is no requirement to request access to the IT infrastructure, to send the data collected by the apparatus to the application server, as the apparatus is already part of the IT infrastructure. The location of the apparatus can be determined using an identifier transmitted as part of the beacon signal.

According to an example, end-user interfaces 130 with Smart Bluetooth functionality can be used to locate other end-user interfaces that do not support Smart Bluetooth functionality. In an example, a laptop with Smart Bluetooth (e.g. Standard Bluetooth or Bluetooth 3.0) functionality can become a beacon for other laptops without Smart Bluetooth functionality.

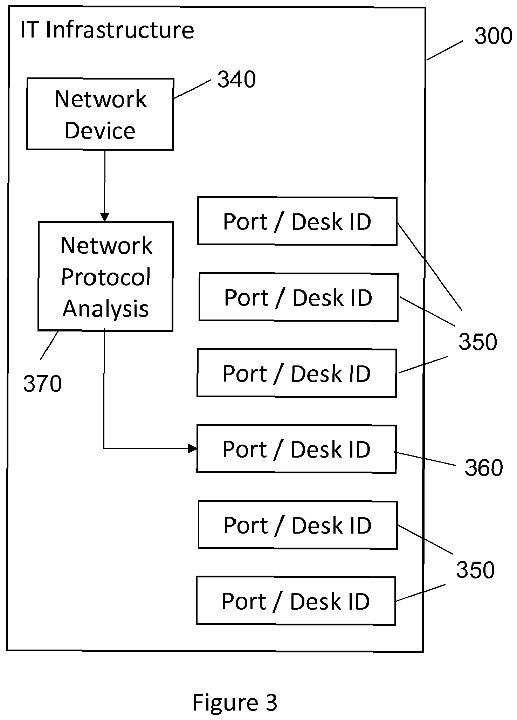

Referring to figure 3, a network protocol analysis 370 can determine location properties of a laptop and an associated port/desk ID 360 which the laptop using. This is achieved by the client obtaining the MAC address by catching a STP (Spanning Tree Protocol) message that is sent by the network device 340 to the laptop. The client will then send this MAC address to the application server 220 to indicate that the desk place is no longer free. Optionally, if the employee gives their agreement, their name or other ID can be sent to the application server 220. In this latter option, identifying information from a workplace IT service is not needed to identify which employee sits at which desk.

The management of resources via a network protocol analysis provides several benefits over existing approaches, including time saving for employees by simplifying the use of workplace resources, enhanced collaboration, and well-being due to a better appropriation of the working environment. It has the benefit of cost saving by a better management of building occupancy, energy, and other workplace resources. Since no additional hardware over the existing IT infrastructure is required there is a transparency to IT infrastructure and energy saving is achieved at the application level giving flexibility and scalability. The approach is less intrusive to employees, since it uses a computer or allocated laptop (rather than a smartphone and/or other personal device carried by the employee based on beacon approaches), which is a key consideration for working councils and trade unions. The management of resources via a network protocol analysis makes it possible to more effectively manage building occupancy and save costs when compared to existing approaches.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for determining the location of apparatus in a network infrastructure, the method comprising:
mapping a unique identifier assigned to a network interface of an apparatus to a network interface of a network device; and
using the local area network connection, determining the location of the apparatus.

2. A method as claimed in claim I, further comprising:
using a bridge protocol data unit received at the apparatus or otherwise, determining a port of the network device connected to the local area network connection.

3. A method as claimed in claim 2, further comprising:
using the bridge protocol data unit, determining a media access control address of the port of the network device.

4. A method as claimed in any preceding claim, further comprising:
mapping an identifier associated with the local area network connection of the apparatus to a physical position in an environment.

5. A method as claimed in any preceding claim, further comprising:
performing an initial coarse apparatus localisation using a low power radio-frequency beacon.

6. A method as claimed in claim 5, further comprising:
receiving a beacon signal from a beacon, and
determining the coarse apparatus location using an identifier transmitted as part of the beacon signal.

7. An apparatus for determining the location of apparatus in a network infrastructure, the apparatus comprising:
a first network interface having an assigned unique identifier;
an application server, for mapping the unique identifier of the first network interface to a second network interface associated with a network device; and
a local area network connection, for determining the location of the apparatus.

8. An apparatus as claimed in claim 7, further comprising:
a bridge protocol data unit, for determining a port of the network device connected to the local area network connection or determining a media access control address of the port of the network device.

9. An apparatus as claimed in claim 7 or claim 8, further comprising:
a low power radio-frequency beacon, for performing an initial coarse apparatus localisation.

10. A non-transitory machine-readable storage medium encoded with instructions executable by a processor, the machine-readable storage medium comprising:
instructions to map a unique identifier assigned to a network interface of an apparatus to a network interface of a network device; and
instructions to determine the location of the apparatus using the local area network connection.

11. A non-transitory machine-readable storage medium encoded with instructions executable by a processor, as claimed in claim 11, the machine-readable storage medium further comprising:
instructions to process a bridge protocol data unit received at the apparatus or otherwise, determine a port of the network device connected to the local area network connection.

12. A non-transitory machine-readable storage medium encoded with instructions executable by a processor, as claimed in claim 10 or 11, the machine-readable storage medium further comprising:
instructions to determine a media access control address of the port of the network device using the bridge protocol data unit.

13. A non-transitory machine-readable storage medium encoded with instructions executable by a processor, as claimed in claim 10 or 11, the machine-readable storage medium further comprising:
instructions to map an identifier associated with the local area network connection of the apparatus to a physical position in an environment.

14. A non-transitory machine-readable storage medium encoded with instructions executable by a processor, as claimed in claim 10 or 11, the machine-readable storage medium further comprising:
instructions to perform an initial coarse apparatus localisation using a low power radio-frequency beacon.

15. A non-transitory machine-readable storage medium encoded with instructions executable by a processor, as claimed in claim 10 or 11, the machine-readable storage medium further comprising:
instructions to receive a beacon signal from a beacon; and
instruction to determine the coarse apparatus location using an identifier transmitted as part of the beacon signal.
